# EUROPÄISCHE PATENTANMELDUNG

(11) **EP 2 182 256 A1**
(43) Veröffentlichungstag der Anmeldung: **05.05.2010**
(21) Anmeldenummer: 09013652.4
(22) Anmeldetag: 30.10.2009
(51) Int. Cl.: F16J 15/16, F16J 15/32

(54) **Wellenabdichtung an einer Wellendurchführung**

(30) Priorität: 30.10.2008 DE 102008054046
(71) Anmelder: Lenze Drives GmbH, 32699 Extertal (DE)
(72) Erfinder: Hütte, Jürgen, 32683 Barntrup (DE)
(74) Vertreter: Schober, Mirko

(57) **Zusammenfassung**

Die Wellenabdichtung an einer Wellendurchführung durch ein feststehendes Gehäuseteil (2) trennt einen abgeschlossenen Innenraum (A) von einem in Achsrichtung der Welle (1) angrenzenden Luftraum (B), wobei der Innenraum (A) ein fließ- oder kriechfähiges Medium enthält, von dem der Luftraum (B) freizuhalten ist. Die Wellenabdichtung besteht aus einem fest auf der Welle sitzenden Dichtring (3), an dem koaxial ein elastisches Dichtteil (4) vorsteht, welches von einem koaxialen, am Gehäuseteil (2) festen Kragen (6) untergriffen ist und sich von der Anlage daran unter Aufweitung infolge Fliehkrafteinwirkung abhebt und welches eine zur Welle (1) hin liegende, mit dem Luftraum (B) in Verbindung stehende Ringkammer (B1) von einem Ringraum (A1) an seiner von der Welle (1) abliegenden Seite abteilt, wobei dieser Ringraum (A1) mit dem geschlossenen Innenraum (A) über einen von der Welle (1) weggerichteten Ringspalt (8) verbunden ist, der zum einen von dem Dichtring (3) und zum anderen von einem am Gehäuseteil (2) festen Gegenring (5) begrenzt ist. Damit die Wellenabdichtung schon bei geringeren Wellendrehzahlen eine ausreichende dynamische Abdichtung im Bereich des Ringspaltes (8) zwischen dem Dichtring (3) und dem gehäusefesten Gegenring (5) sichert, sind an den Dichtring (3) in den Ringspalt (8) hineinragende, schaufelartige Förderrippen (9) angeordnet.

## Beschreibung

Die Erfindung bezieht sich auf eine Wellenabdichtung an einer Wellendurchführung durch ein feststehendes Gehäuseteil gemäß den Merkmalen des Oberbegriffs des Patentanspruchs 1.

Eine solche Wellenabdichtung ist aus dem Dokument EP 1 122 472 B1 bekannt. Das vornehmliche Einsatzgebiet solcher Wellenabdichtungen findet sich bei Getriebemotoren, deren Getriebeinnenraum den geschlossenen Innenraum darstellt, in welchem sich als kriech- oder fließfähiges Medium ein Schmieröl oder -fett befindet. Der Luftraum mit Verbindung zur atmosphärischen Außenluft ist der Motorinnenraum, der von dem in dem Getriebeinnenraum befindlichen Medium freizuhalten ist.

Wellenabdichtungen dieser Art sind verschleißarm, da bei den üblichen hohen Betriebsdrehzahlen der Welle die Dichtung zwischen dem Innenraum und dem Luftraum allein durch die Fliehkraft im Ringspalt zwischen dem Dichtring und dem mit dem Gehäuseteil festen Gegenring bewirkt wird. Hierbei ist das elastische Dichtungsteil am mit der Welle mit rotierenden Dichtring von dem mit dem Gehäuseteil festen Kragen abgehoben, so dass keine verschleißende Reibung zwischen dem Dichtungsteil und dem Kragen auftritt. In diesem Betriebszustand besteht eine durchgehende Verbindung zwischen dem unter atmosphärischer Außenluft stehenden Luftraum und dem abgeschlossenen Innenraum über den ringförmigen Spalt entlang der Welle zu der dieser benachbarten Ringkammer radial unterhalb dem Dichtungsteil, des weiteren an diesem Dichtungsteil vorbei in den radial darüberlegenden Ringraum und den daran anschließenden Ringspalt. Hierdurch kann über den beschriebenen Weg Außenluft von dem Luftraum in den geschlossenen Innenraum aufgrund der Fliehkrafteinwirkung gepumpt werden.

Die Funktion dieser Wellenabdichtung ist von der Zentrifugalkraft abhängig, aufgrund deren Wirkung nicht nur das elastische Dichtteil öffnet, sondern auch der als Schleuderscheibe fungierende Dichtring das in den Ringspalt zwischen dem Dichtring und dem Gegenring eingedrungene Medium des geschlossenen Innenraums in diesen zurückbefördert wird. Die wirkende Zentrifugalkraft bei drehender Welle ist umso geringer, je kleiner die Wellendrehzahl ist. An geringere Wellendrehzahlen lässt sich die Funktion des Dichtteils aufgrund Änderung seiner Elastizität leicht anpassen. Problematischer hingegen ist die dynamische Dichtwirkung im Ringspalt bei geringen Wellendrehzahlen.

Der Erfindung liegt die Aufgabe zugrunde, eine Wellenabdichtung der vorgenannten Art zu schaffen, die schon bei geringeren Wellendrehzahlen eine ausreichende dynamische Abdichtung im Bereich des Ringspaltes zwischen dem Dichtring und dem gehäusefesten Gegenring sichert.

Diese Aufgabe wird durch die Gesamtheit der Merkmale des Patentanspruchs 1 gelöst.

Für die Erfindung ist wesentlich, dass die in den Ringspalt hineinragenden, schaufelartigen Förderrippen am Dichtring für eine turbulente Strömung im Ringspalt in Richtung von der Welle weg sorgen, wobei insbesondere auf die Anteile des fließ- oder kriechfähigen Mediums im Ringspalt eine intensivere Förderwirkung ausgeübt wird. Von weiterem Vorteil ist, dass die Anpresskraft des elastischen Dichtstücks an dem mit dem Gehäuseteil festen Kragen reduziert werden kann, womit der durch Reibung bedingte Verschleiß vermindert ist.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen halbseitigen axialen Schnitt durch eine Wellenabdichtung im Bereich einer Wellendurchführung,
- Fig. 2: eine perspektivische Ansicht des Dichtringes der Wellenabdichtung auf die zum Ringspalt hin liegende Seite gesehen und
- Fig. 3: eine der Fig. 2 entsprechende Ansicht des Dichtringes in anderer Ausführung.

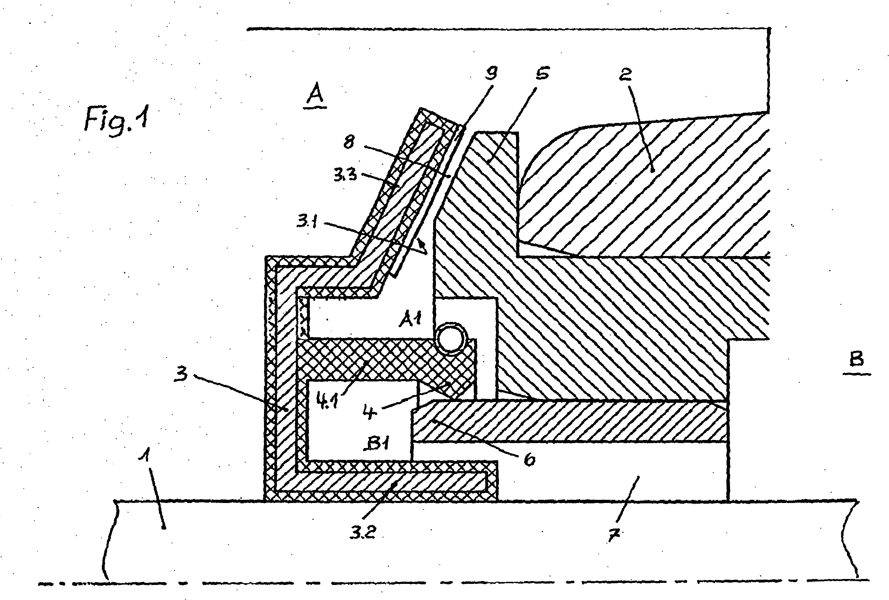

Im Einzelnen erkennt man in Fig. 1 eine Welle 1 die durch ein Gehäuseteil 2 hindurchgeführt ist. Im Bereich der Wellendurchführung befindet sich eine Wellenabdichtung, welche einen in der Darstellung linken Innenraum A gegenüber einem in der Darstellung rechten Luftraum B abdichtet. Der Innenraum A ist ein geschlossener Raum, wie er insbesondere durch den Innenraum des Getriebegehäuses eines Getriebemotors verkörpert wird. In dem Innenraum A befindet sich ein kriech- oder fließfähiges Medium, wie ein Schmieröl oder -fett, dessen Übertritt in den Luftraum B sowohl bei stehender als auch bei drehender Welle 1 unterbunden ist. Der Luftraum B ist in der praktischen Ausführung der Motorinnenraum des Getriebemotors, der mit unter atmosphärischem Druck stehender Außenluft belüftet ist. In axialer Richtung der Welle 1 gesehen, liegen der geschlossene Innenraum A und der Luftraum B hintereinander..

Die Dichtungsanordnung umfasst einen Dichtring 3 mit einem Nabenteil 3.2, welches fest auf der Welle 1 angeordnet ist. In radialem Abstand vom Nabenteil 3.2 ist in Richtung zum Gehäuseteil 2 vorstehend ein Dichtungsteil 4 am Dichtring 3 angeordnet, welches einschließlich einem in der Ruhelage zylindrischen an den Dichtring 3 anschließenden Wandungsteil 4.1 elastisch ausgebildet ist. Das Dichtungsteil 4 mit seinem Wandungsteil 4.1 teilt einen Ringraum A1 von einer Ringkammer B1 ab, wobei letztere zur Welle 1 hin angeordnet ist. Ein bis in die Ringkammer B1 hineinreichender Kragen 6, der sowohl mit der Welle 1 als auch mit dem Dichtungsteil 4 koaxial ist, untergreift das Dichtungsteil 4, welches bei stehender oder langsam drehender Welle 1 auf der radialen Außenseite des Kragens 6 aufliegt. Der Kragen 6 ist Teil des feststehenden Gehäuseteils 2, er kann an einen Gegenring 5 angesetzt sein, der fest mit dem Gehäuseteil 2 verbunden ist. Von der Ringkammer B1 erstreckt sich entlang der radialen Innenseite des Kragens 6, die einen Abstand von der Welle 1 hat, ein im Querschnitt ringförmiger Spalt 7 bis zu dem Luftraum B hin.

An den Ringraum A1 schließt ein von der Welle 1 weggerichteter Ringspalt 8 an, der in den geschlossenen Innenraum A mündet. Es handelt sich um einen schmalen Ringspalt 8, der sich zwischen dem feststehenden Gegenring 5 und einem Endabschnitt 3.3 des Dichtrings 3 erstreckt. Dieser Endabschnitt 3.3 des mit der Welle 1 mit drehenden Dichtrings 3 wirkt als Schleuderscheibe, die entsprechend bei höheren Drehzahlen der Welle 1 das im Ringspalt 8 befindliche Medium, insbesondere Luft und eingedrungene Schmiermittelanteile, in den geschlossenen Innenraum A befördert und hierdurch einen Unterdruck in dem Ringraum A1 an der radialen Außenseite des Dichtungsteils 4 bewirkt.

Bei den höheren Drehzahlen hebt das Dichtungsteil 4 ebenfalls aufgrund der Fliehkrafteinwirkung von der radialen Außenseite des mit dem Gehäuseteil 2 festen Kragens 6 ab. Dadurch besteht eine Verbindung zwischen dem radial äußeren Ringraum A1 und der radial inneren Ringkammer B1, die über den ringförmigen Spalt 7 bis hin zu dem Luftraum B weiterreicht. Die Folge ist, dass über diesen Verbindungsweg vom Luftraum B weitere atmosphärische Außenluft in den geschlossenen Innenraum A transportiert wird, und zwar unter einer Pumpwirkung, aufgrund deren sich im geschlossenen Innenraum A ein Überdruck gegenüber dem Druck im Ringraum A1 einstellt. Die Folge ist, dass über diesen Verbindungsweg vom Luftraum B atmosphärische Außenluft wie auch im Luftspalt befindliches Medium aus dem geschlossenen Innenraum A in diesen transportiert wird.

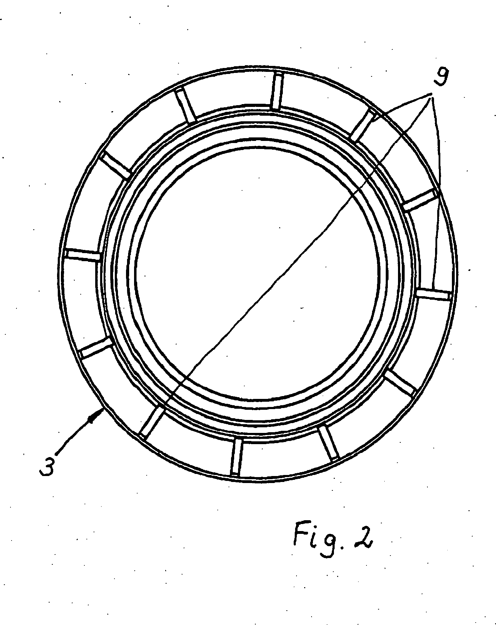

Der Ringspalt 8 ist einerseits von einer glatten Seite des mit dem Gehäuseteil 2 festen Gegenringes 5 und andererseits von einer profilierten Innenseite 3.1 des Endabschnitts 3.3 des Dichtringes 3 begrenzt. Diese Profilierung besteht aus schaufelartigen Förderrippen 9, die in den Ringspalt 8 vorsehen. Wie Fig. 2 veranschaulicht, können die Rippen geradlinig auf das Zentrum des Dichtringes 3 weisend ausgeführt sein. Sofern der Ringspalt 8 sich in einer Radialebene erstreckt, haben bei dieser Ausführung die Förderrippen 9 eine radiale Ausrichtung. Bei zur Wellenachse geneigter Anordnung des Ringspaltes 8, wie in Fig. 1 wiedergegeben ist, liegen die Förderrippen 9 in einer Axialebene, in der auch die Achse der Welle 1 liegt. Die Anordnung der Förderrippen 9 nach Fig. 2 eignet sich für eine Wellenabdichtung mit wechselnden Drehrichtungen der Welle 1.

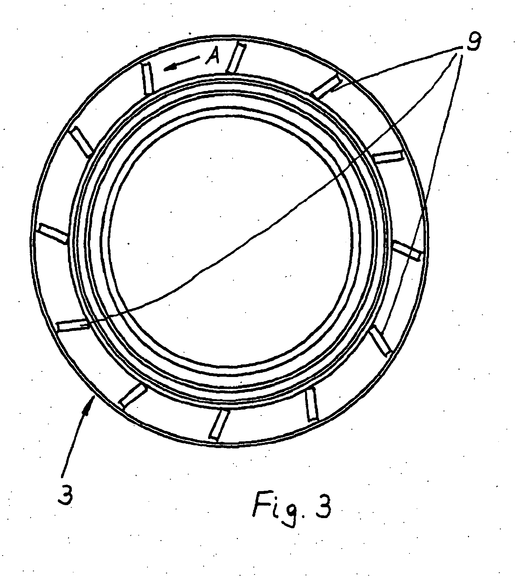

Anders verhält es sich bei dem Ausführungsbeispiel nach Fig. 3, welches drehrichtungsorientiert ist. Hier sind die Förderrippen relativ zu der vorerwähnten Axialebene geneigt angeordnet, wobei bezogen auf die Drehrichtung der Welle 1, die durch den Pfeil A angegeben ist, das wellennahe Ende gegenüber dem wellenfernen Ende der Förderrippen 9 vorläuft.

Unabhängig von ihrer Ausrichtung sind die Förderrippen 9 des Dichtringes 3 miteinander drehsymmetrisch bezogen auf die Achse der Welle 1 angeordnet und weisen ferner eine regelmäßige Teilung in Umfangsrichtung des Dichtringes 3 auf.

## Patentansprüche

1. Wellenabdichtung an einer Wellendurchführung durch ein feststehendes Gehäuseteil (2), das einen abgeschlossenen Innenraum (A) von einem in Achsrichtung der Welle (1) angrenzenden Luftraum (B) trennt, wobei der Innenraum (A) ein fließ- oder kriechfähiges Medium enthält, von dem der Luftraum (B) freizuhalten ist, bestehend aus einem fest auf der Welle (1) sitzenden Dichtring (3), an dem koaxial ein elastisches Dichtteil (4) vorsteht, welches von einem koaxialen, am Gehäuseteil (2) festen Kragen (6) untergriffen ist und sich von der Anlage daran unter Aufweitung infolge Fliehkrafteinwirkung abhebt und welches eine zur Welle (1) hin liegende, mit dem Luftraum (B) in Verbindung stehende Ringkammer (B1) von einem Ringraum (A1) an seiner von der Welle (1) abliegenden Seite abteilt, wobei dieser Ringraum (A1) mit dem geschlossenen Innenraum (A) über einen von der Welle (1) weggerichteten Ringspalt (8) verbunden ist, der zum einen von dem Dichtring (3) und zum anderen von einem am Gehäuseteil (2) festen Gegenring (5) begrenzt ist,
**dadurch gekennzeichnet,**
**dass** an den Dichtring (3) in den Ringspalt (8) hineinragende, schaufelartige Förderrippen (9) angeordnet sind.

2. Wellenabdichtung nach Anspruch 1,
**dadurch gekennzeichnet,**
**dass** die Förderrippen (9) des Dichtringes (3) miteinander drehsymmetrisch bezogen auf die Wellenachse sowie mit gleicher Teilung je in einer Axialebene durch die Wellenachse angeordnet sind.

3. Wellenabdichtung nach Anspruch 1,
**dadurch gekennzeichnet,**
**dass** die Förderrippen (9) des Dichtringes (3) miteinander drehsymmetrisch bezogen auf die Wellenachse sowie mit gleicher Teilung je in einer zur Axialebene durch die Wellenachse geneigten Ebene angeordnet sind, wobei bezogen auf die Drehrichtung der Welle (1) das wellennahe Ende gegenüber dem wellenfernen Ende der Förderrippen (9) vorläuft.
